# EUROPÄISCHE PATENTSCHRIFT

(11) **EP 1 789 500 B1**
(45) Veröffentlichungstag und Bekanntmachung des Hinweises auf die Patenterteilung: **09.09.2009**
(21) Anmeldenummer: 05784646.1
(22) Anmeldetag: 12.09.2005
(51) Int. Cl.: C09C 3/06, C09C 3/12, C01G 19/02, C09C 1/04

(54) **SILIKAT-BESCHICHTUNG**
SILICATE COATING
REVETEMENT SILICATE

(30) Priorität: 15.09.2004 DE 102004045038; 15.09.2004 DE 102004051644
(43) Veröffentlichungstag der Anmeldung: 30.05.2007
(73) Patentinhaber: Air Products and Chemicals, Inc., Allentown, PA 18195-1501 (US)
(72) Erfinder: BURGARD, Detlef, 66333 Völklingen (DE); SCHNADINGER, Christian, 66780 Rehlingen-Siersburg (DE); NASS, Rüdiger, 66292 Riegelsberg (DE)
(74) Vertreter: Jönsson, Hans-Peter
(86) Internationale Anmeldenummer: PCT/EP2005/054527
(87) Internationale Veröffentlichungsnummer: WO 2006/030001

(56) Entgegenhaltungen:
- EP-A- 0 595 471
- US-A- 6 132 773

## Beschreibung

Die vorliegende Erfindung betrifft ein Verfahren zur Herstellung einer Silikat-Beschichtung auf Partikeln sowie die so erhaltenen Partikel.

Es sind eine Vielzahl umhüllter Teilchen (Partikel) bekannt. Sie werden benötigt, wenn ein Teilchen mit bestimmten Eigenschaften, wie eine gegebene Lumineszenz, Absorption, Färbung etc. andere Eigenschaften nicht besitzt, die aber gleichfalls benötigt werden. So können biologische Marker durch Partikel vorgesehen werden, die aufgrund ihrer Lumineszenz besonders gut nachweisbar sind und aufgrund ihrer Hüllmaterialeigenschaften leicht eine Verbindung mit spezifischen Substanzen wie Enzymen oder dergleichen eingehen. Die Hüllen sind oftmals organisch, was die Anwendbarkeit einschränkt.

Auch sind in bestimmten Anwendungen nur einzelne Eigenschaften von Partikeln erwünscht, während andere Eigenschaften störend wirken. So gibt es eine Vielzahl von transparenten IR-Absorbern, die zugleich eine gute elektrische Leitfähigkeit aufweisen ("transparent conductive oxides", TCO). Diese Leitfähigkeit bleibt oftmals sogar beim Einbau von Partikeln in eine Matrix erhalten, wie beispielsweise einen Lack und zwar selbst dann, wenn die Perkolationsgrenze unterschritten wird. Dies ist oftmals unerwünscht, etwa bei Verglasungen, weil die flächige Aufbringung auf Verglasungen zu leitenden Flächen führt, die - etwa in einem Gebäude oder Haus - die Mobilfunktelefonie beeinträchtigt. Hier werden die TCOs oder andere Substanzen als Zuschlagstoffe verwendet.

Zuschlagstoffe wie Additive, Füllstoffe, Pigmente und dergleichen werden in einer Vielzahl von Anwendungen benötigt. Sie verleihen einer Matrix, in welche sie eingearbeitet werden oder einem größeren Körper, an welchem sie chemisch oder physisch anhaften, bestimmte Eigenschaften, beispielsweise ein bestimmtes, gewünschtes optisches Verhalten. Wichtig dabei ist, dass die Zuschlagstoffe zwar die gewünschten Eigenschaften vorsehen müssen, aber zugleich keine negativen Auswirkungen etwa bezüglich der Beständigkeit oder Biokompatibilität beziehungsweise der biologischen und/oder lebensmittelrechtlichen Unbedenklichkeit herbeiführen dürfen.

Problematisch ist dies insbesondere dann, wenn die Zuschlagstoffe nicht in einer Matrix fest und zumindestens weitgehend unzugänglich eingearbeitet werden können und das Material, mit welchem der Zuschlagstoff zu verwenden ist, überdies wechselnden und/oder chemisch aggressiven Umgebungen ausgesetzt wird. Als Beispiel seien Zuschlagstoffe für faserige Materialien wie Baumwolle genannt. Es gibt Zuschlagstoffe, die auf den Baumwollfasern anhaften bleiben müssen, obwohl das Material zum Beispiel dem sauren Milieu von Hautschweiß und dergleichen ausgesetzt wird. Nichts anderes gilt auch für Zuschlagstoffe etwa für Papierfasern, Cellulose und dergleichen; hier sind zum Beispiel Titanoxid-Zuschlagstoffe als Weißmacher zu nennen. Gleichfalls problematisch sind Zuschlagstoffe, etwa für Druckfarben und Tinten, vor allem wenn die Druckerzeugnisse in häufigen Hautkontakt kommen, da eine Einbindung in Druckfarben in der Regel nicht sonderlich stabil ist.

Ein Zuschlagstoff, der aus Gründen seiner optischen Eigenschaften hohe Attraktivität besitzt, ist Indiumzinnoxid mit einem Sn-Gehalt von 7 ± 0,5 mol% und zwar bestimmt für die Verdruckung in Offsetdruck- und Tintenstrahlprozessen. Um diesen Stoff über seine optischen Eigenschaften hinaus attraktiver zu gestalten, ist es erforderlich, ihn in biokompatibler Form herzustellen. Dabei meint biokompatibel nicht zwingend nahrungsmitteltechnisch unbedenklich, aber doch in einer Form, die einen Kontakt mit solchen Materialien ungefährlich macht, wie weiter unten definiert.

Herstellungstechnische Probleme treten besonders dann auf, wenn zu druckende Pigmente in ihrer Biokompatibilität verbessert werden sollen beziehungsweise Pigmente mit verbesserter Biokompatibilität hergestellt werden sollen, die als Pigmente für den Druck verwendet werden sollen, ohne dass gewünschte Pigmenteigenschaften wie Partikelgröße signifikant anders beeinflusst werden. Es sind oftmals von Pigment zu Pigment unterschiedliche Herstellungsverfahren erforderlich, um gewünschte optische Eigenschaften und drucktechnische Eigenschaften bei ausreichender Biokompatibilität zu erhalten.

Ein relevantes Pigment ist beispielsweise Indiumzinnoxid mit ± 0,5 mol% Zinngehalt und einer Partikelgröße kleiner 10 µm. Effiziente Herstellungsverfahren für derartige Pigmente in biokompatibler Form sind wünschenswert.

Es gibt eine Reihe von Schutzrechten, die sich bereits mit Zuschlagstoffen befassen. Genannt sei beispielsweise die EP 0492 223 A2 betreffend silanisierte Pigmente und deren Verwendung zur Vergilbungsinhibierung von pigmentierten Kunststoffen, in welcher die Erhöhung der Stabilität von Pigmentoberflächen gegen die Einwirkung von Luft, Sauerstoff, Wärme und Licht angesprochen wird und eine Chemiesoption von Silanverbindungen an Pigmente erwähnt wird, wobei die Pigmentbeschichtung insbesondere ohne Lösungsmittelzusatz oder Zusatz anderer Stoffe, wie Kopplungsreagentien, Trägerflüssigkeiten in einen Intensivmischer erfolgen soll. Weiter seien erwähnt die DE 198 17 286 betreffend ein mehrschichtiges Perlglanzpigment auf Basis eines opaken Substrates, wobei dieser Anmeldung unter anderem die Pigmentierung von Wert- und Sicherheitspapieren und von Verpackungen, sowie die Lasermarkierung polymerer Materialien und Papiere diskutiert; als Metalloxide erwähnt werden dort TiO₂, ZrO₂, Fe₂, O₃, Fe₃O₄, Cr₂O₃, ZnO, (SnSb) O₂, Al₂O₃, Mischungen davon, SiO₂.

In der Schrift wird vorgeschlagen, Glimrrierpigmente einer Teilchengröße ab etwa 10 µm so zu beschichten, dass sie einen besonders ausgeprägten Farbflop zeigen, was bedeutet, dass die Interferenzfarben des Glimmers sehr stark vom Betrachtungswinkel abhängen sollen. Die Verwendung in Autolacken wird beispielhaft erwähnt.

Weiter sei hingewiesen auf die EP 0 608 388 B1, die ein plättchenförmiges Pigment mit hohem Glanz und hohem Deckermögen oder hoher Transparenz offenbart, wobei dieses auf eine bestimmte Art und Weise hergestellt wird und mit einer Matrix zur Erzielung eines Glanzes versehen wird. Oberflächenmodifizierte Pigmente in Form von Titandioxidpigmenten und einer Schicht aus Boraten der Erdalkalimetalle oder Doppelboraten der Alkali und/oder Erdalkalimetalle sind offenbart in der EP 0 641 842 B1. Die DE 697 23 347 betrifft sphärische SiO₂-Teilchen mit einer Größe von 5 bis 500 nm und einer punktuellen Beschichtung mit Metalloxidteilchen mit einer Größe von weniger als 60 nm.

Die DE 100 22 037 A1 betrifft überdies IR-absorbierende Zusammensetzungen enthaltend transparente thermoplastische Polymere und oberflächenmodifizierte Oxidteilchen mit einer Teilchengröße von weniger als 200 nm und organische NIR-Absorber, sowie deren Herstellung, deren Verwendung und daraus hergestellte Erzeugnisse.

EP 0 245 984 A1 beschreibt die Beschichtung von TiO₂-Partikeln mit Silikat. Die Zugabe der Silikatlösung während der Beschichtung findet bei einem pH-Wert wesentlich oberhalb des isoelektrischen Punktes von Titanoxid statt, ohne jeglichen Eintrag von zusätzlicher Energie. Der pH-Wert schwankt stark während dem Beschichtungsprozess. Ein unkontrollierbar schnelles Wachstum der Beschichtung während des Beschichtungsprozesses und die Beschichtung von Partikelagglomeraten kann mit diesem Verfahren nicht verhindert werden, weshalb auch in einem weiteren Schritt das entstandene Pigment wieder zerkleinert werden muss.

US 6,440,322 B1 beschreibt die Beschichtung von Eisenoxidpartikeln mit Silikat. Auch in diesem beschriebenen Verfahren wird der pH-Wert während der Beschichtung nicht konstant gehalten und liegt während der Beschichtung weit oberhalb von pH 8 und wird nach der Reaktion mit Salzsäure auf einen pH-Wert von 8 eingestellt. Auch in diesem Beschichtungsverfahren wird keine zusätzliche Energie eingetragen.

EP 1 477 465 A1 beschreibt die Beschichtung von Glassubstraten mit einem Beschichtungsmaterial von Partikeln aus Indiumzinnoxid und Partikeln aus Siliziumoxid. Bei der Herstellung des Beschichtungsmaterials werden die Indiumzinnoxidpartikel ohne vorher in Lösung oder dispergiert zu sein zu einer Mischung enthaltend Wasserglas und Siliziumoxidpartikel gegeben.

JP 2003-246965 beschreibt die Modifizierung von Partikeln aus Indiumzinnoxid mit Tetraethoxysilanen.

DE 697 08 085 T2 beschreibt die Beschichtung von Oxidpartikeln mit Siliziumdioxid, wobei kein zusätzlicher Energieeintrag stattfindet und die Beschichtung im stark alkalischen Milieu bei einem pH-Wert im Bereich von 8 bis 10 stattfindet. Bei diesem Beschichtungsverfahren wird weiterhin ein zusätzlicher Elektrolyt zwingend benötigt. Da die Beschichtung im stark alkalischen Milieu stattfindet, kommt es zu unkontrolliertem Wachstum der Beschichtung. Daher müssen die beschichteten Teilchen nach dem Trocknen atomisiert werden (vgl. S. 8, 3. Absatz).

### EP 0595471 A1 offenbart Partikel mit einer Silikatbeschichtung.

Da die bisher bekannten Beschichtungsverfahren im stark alkalischen Milieu stattfinden, und eine Agglomeratbildung der zu beschichtenden Primärpartikel nicht verhindert werden kann, kommt es bei den bislang bekannten Verfahren zu unkontrolliertem Wachstum der Silikatbeschichtung während des Beschichtungsverfahrens oder auch zur Beschichtung von Agglomeraten der Primärpartikel statt der Primärpartikel selbst.

Aufgabe der vorliegenden Erfindung ist es also ein Verfahren bereitzustellen, bei dem die Beschichtung gleichmäßig und kontrolliert auf die Partikel aufwachsen kann und sichergestellt ist, dass nicht Agglomerate der Primärpartikel sondern die Primärpartikel selbst beschichtet werden, wobei Partikel (Zuschlagstoffe) mit möglichst hoher Biokompatibilität entstehen. Eine weitere Aufgabe der vorliegenden Erfindung ist es, eine stabile und reproduzierbare Veränderung der Oberflächenchemie von Primärpartikeln zu erzeugen, die zu erhöhter chemischer und mechanischer Stabilität führt.

Die der Erfindung zugrundeliegende Aufgabe wird gelöst in einer ersten Ausführungsform durch ein Verfahren zur Herstellung einer Silikatbeschichtung auf Partikeln, **dadurch gekennzeichnet, dass** man zu einer Dispersion der unbeschichtenden Partikel mit einen Durchmesser von kleiner 50 µm unter akustischer Erregung eine Silikat enthaltende Lösung gibt, wobei man den pH-Wert während der Zugabe der Silikat enthaltenden Lösung auf höchstens 7 einstellt.

Durch das erfindungsgemäße Verfahren kann das Zeta-Potential der Primärpartikel leicht angepasst werden, was zu einer verbesserten Dispergierbarkeit und einem einheitlichen Verhalten im elektrischen Feld (beispielsweise Geschwindigkeit in der Elektrophorese) führt. Anders also bei organischen Beschichtungen, wird das Material bei der Elektrophorese nicht aufgeweicht.

Durch die akustische Erregung beispielsweise in Form von Ultraschall während des Beschichtungsvorgangs werden die zu beschichtenden Partikel getrennt und möglicherweise gebildete Agglomerate von Primärpartikeln aufgebrochen. Dadurch, dass nicht Agglomerate sondern nur die Primärpartikel selbst beschichtet werden, sind die resultierenden beschichteten Partikel mechanisch und chemisch wesentlich stabiler, da beschichtete Agglomerate durch "Aufflockung" beziehungsweise Aggregatbildung leicht auseinandergebrochen werden können und so angreifbar sind.

Weiterhin kann durch das erfindungsgemäße Verfahren und vor allem die akustische Erregung während des Beschichtungsverfahrens ein Mahlen beziehungsweise Atomisieren nach der Trocknung des beschichteten Produktes überflüssig werden. Bei den bekannten Verfahren wurden zwangsläufig immer die agglomerierten Primärpartikel im Verbund als Agglomerate beschichtet. Dadurch wurden beim Mahlen die Oberflächen der Primärpartikel wieder exponiert und so die Eigenschaften des erhaltenen Pigments entscheidend verändert. Im Gegensatz dazu werden mit dem erfindungsgemäßen Verfahren durch die akustische Erregung nur die Primärpartikel an sich beschichtet. Selbst wenn die beschichteten Partikel anschließend gemahlen werden sollten, so werden die möglicherweise beim Trocknen entstandenen Agglomerate zwar aufgebrochen, aber die Oberflächen der Primärpartikel werden nicht exponiert. So bleiben die Eigenschaften der beschichteten Partikel auch nach einem etwaigen Mahlvorgang erhalten.

Durch eine Silikathülle um ein Kernmaterial kann dessen gewünschte Eigenschaft in weitem Maße erhalten bleiben, obwohl die Oberflächeneigenschaften und insbesondere die chemische Angreifbarkeit signifikant verändert werden.

Insbesondere dann, wenn der Zuschlagstoff durch das Kernmaterial festgelegte optische Eigenschaften aufweisen soll, ist es möglich, diese auch durch die Silikathülle hindurch und ungeachtet derselben zu erhalten. Dies gilt insbesondere dann, wenn es sich, wie bevorzugt möglich, um einen als IR-Absorber dienenden Zuschlagstoff beziehungsweise ein Zuschlagmaterial handelt.

Dies gilt insbesondere dann, wenn es sich, wie bevorzugt möglich, um einen als IR-Absorber oder der Lumineszenz dienenden Zuschlagstoff beziehungsweise ein Zuschlagmaterial handelt. Die elektrischen Eigenschaften können durch das erfindungsgemäße Verfahren signifikant verändert werden. Die erfindungsgemäß hergestellten Teilchen sind signifikant stabiler als nicht umhüllte Teilchen. So können beispielsweise Titannitridteilchen erhalten werden, die auch in tropischen oder subtropischen Klimate wesentlich beständiger sind als unbehandelte Partikel, was die Verwendung in Solarabschirmungen begünstigt. Feuchtigkeit und/oder Oxidation beeinträchtigen die erfindungsgemäß hergestellten Kern-Hülle-Teilchen wesentlich weniger als reine Ausgangs-Kernteilchen.

Die so hergestellten Kern-Hülle-Teilchen sind in einer Vielzahl von Anwendungen einsetzbar, beispielsweise starker IR-Absorption und geringer Leitfähigkeit, wie sie sich bei gekapselten TCOs einstellt, für Verglasungsbeschichtungen, als Ausgangsmaterial für Marker, da auf die stabile Silikathülle ohne weiteres weitere Schichten aufgebracht werden können, beispielsweise solche aus einer für Analysezwecke eingesetzten Substanz, für farbige Beschichtungen mit sonst nur durch Sputtern aufgebrachten, weil relativ instabilen Materialien *et cetera*.

Vorteilhaft ist hier stets zumindest eine der Eigenschaften gute Redispergierbarkeit, chemische Stabilität und Erhaltung wesentlicher optischer Eigenschaften des Kernmaterials. Diese erlauben auch die Lagerung als Ausgangsmaterial des Produkts für weitere Zwecke wie Analysezwecke und/oder in der Halbleiterindustrie.

Die Zuschlagmaterialien der vorliegenden Erfindung sind beispielsweise mit nanopartikulärem Ausgangsmaterial herstellbar, indem nanopartikuläres Ausgangsmaterial dispergiert wird, und zwar in wässrigem Medium, dabei ein dispersionsbegünstigender pH-Wert eingestellt wird, das silikathüllenbildende Sol-Gel-Material zugesetzt wird und das erhaltene Reaktionsprodukt wie erforderlich thermisch endbehandelt wird.

Es zeigt sich, dass die so hergestellten Partikel ihre die Forderung nach einer Verdruckbarkeit begründenden optischen Eigenschaften bewahren, dass aber doch eine sehr gute Biokompatibilität gegenüber Material gegeben ist, das nicht wie beschrieben hergestellt wurde, insbesondere gegenüber nicht mit Hülle versehenen Indiumzinnoxidpartikeln. Insbesondere ergibt sich eine hohe Biokompatibilität, wenn die verdruckten Pigmente einem sauren Milieu ausgesetzt werden. Die Aufbringung des hergestellten Materials kann später etwa durch Aufdrücken und/oder Sprühen, etwa im Wege konventioneller Drucktechniken wie kontinuierlicher oder diskontinuierlicher Tintenstrahldruckmethoden, Offsetdruck *et cetera* erfolgen.

Das Verfahrensprodukt des erfindungsgemäßen Verfahrens weist also die durch die partikulären Kernteilchen der Ausgangspartikel vorgesehenen optischen Eigenschaften auf, hat eine hohe Stabilität der optischen Eigenschaften auch unter aggressiven chemischen Bedingungen und es gehen keine biologisch erkennbaren Gefahren von Gegenständen behandelt mit dem Verfahrensprodukt (beispielsweise Faserstoff) aus. Dies gilt auch für die Verwendung des Zuschlagstoffs als Pigment in aufzusprühenden Flüssigkeiten.

In dem erfindungsgemäßen Verfahren kann beispielsweise zunächst eine Dispersion der Partikel hergestellt werden, ein vorgegebener pH-Wert für die optimale Dispersion eingestellt werden und danach die Dispersion auf über Raumtemperatur erwärmt werden. Während der Zugabe der Silikatlösung (beispielsweise als Sol-Gel-Material) wird das System beispielsweise durch Ultraschall akustisch erregt. Im Verlauf der Beschichtungsreaktion findet eine Abscheidung der Silikathülle auf den zu beschichtenden Partikeln statt. Die Reaktionsmischung kann bis zum Abschluss der Reaktion und/oder danach weitergerührt, abgekühlt und abgetrennt werden. Die Abtrennung erfolgt beispielsweise durch Filtrieren. Der filtrierte Feststoff wird danach beispielsweise in einem Ofen thermisch nachbehandelt, und zwar bei einer Temperatur, die unterhalb der Sintertemperatur der Silikathülle liegt.

Der erhaltene Zuschlagstoff (Pigment) weist eine zur Verdruckung hinreichende Feinheit auf. Die Teilchengrößenverteilungsuntersuchung deutet daraufhin, dass allenfalls wenige beschichtete Agglomerate vorliegen, was drucktechnisch besonders günstig ist. Der Zuschlagstoff wird beispielweise in aufzusprühenden Flüssigkeiten in einem kontinuierlichen Tintenstrahldruckverfahren verdruckt. Die so bedruckten flächigen Fasergebilde sind biokompatibel und erweisen sich für viele Zwecke als ausreichend säurestabil.

Vorteilhafterweise setzt man im erfindungsgemäßen Verfahren unbeschichtete Partikel mit einem durchschnittlichen Durchmesser in einem Bereich von 15 nm bis 35 µm. Das erfindungsgemäße Verfahren bietet für große Partikel ab etwa 10 µm den entscheidenden Vorteil, dass diese Partikel bislang bei pH-Werten in der Nähe des isoelektrischen Punktes nur schwer in Dispersion gehalten werden. Für kleine Partikel bis zu einem durchschnittlichen Partikeldurchmesser von etwa 100 nm hat das erfindungsgemäße Verfahren den entscheidenden Vorteil, dass mit bekannten Verfahren hauptsächlich Agglomerate von Partikeln in dieser Größenordnung beschichtet werden konnten, da diese Partikel sehr leicht agglomerieren. Mit dem erfindungsgemäßen Verfahren können die Agglomerate unmittelbar vor der Beschichtung durch die akustische Erregung zu Primärpartikeln aufgebrochen werden. So können erstmals zuverlässig auch sehr kleine Partikel zuverlässig als Primärpartikel beschichtet werden.

Liegt die Partikelgröße der unbeschichteten Partikel wesentlich unterhalb dieses bevorzugten Bereiches, so macht der Masseanteil der Beschichtung des beschichteten Partikels gegenüber dem Masseanteil des unbeschichteten Partikels einen immer größeren Anteil aus, so dass die Eigenschaften des unbeschichteten Partikels (beispielsweise optische Eigenschaften) immer weniger erhalten bleiben können. Liegt die Partikelgröße der unbeschichteten Partikel deutlich oberhalb des bevorzugten Bereiches, so können die Partikel bei den Bedingungen des erfindungsgemäßen Verfahrens immer schwieriger stabil in der Dispersion gehalten werden.

Es sind mit der vorliegenden Erfindung Kern-Hülle-Teilchen unterschiedlicher Größe herstellbar. So sind Kernhüllteilchen einer Größe von mehreren µm genauso herstellbar wie nanopartikuläre Kern-Hülle-Teilchen. So sind durch geeignete Ausgangspartikelgrößen auch Kern-Hülle-Teilchen mit einem Durchmesser kleiner als 0,5 µm herstellbar.

Das Verfahren kann der Herstellung beispielsweise von beschichtetem partikulärem Indiumzinnoxid dienen, insbesondere mit einem Durchmesser im Bereich kleiner 10 µm, ohne dass Probleme auftreten. Das Verfahren ist auch beispielsweise anwendbar für nanopartikuläres ITO mit einer Partikelgröße kleiner als 1 µm, beispielsweise für eine Partikelgröße von 5 nm bis wenigen 100 nm (beispielsweise 600 nm), genauso wie für Partikel mit einigen wenigen µm Größe. Insbesondere wird eine stabile und hochbiokompatible Substanz hergestellt.

Für den Fall, dass die unbeschichteten Partikel im wesentlichen aus Indiumzinnoxid bestehen, kann es auch besonders vorteilhaft sein, wenn die durchschnittliche Partikelgröße keiner als 1 µm ist, insbesondere in einem Bereich von 5 nm bis 500 nm liegt.

Vorteilhafterweise liegt die Dicke der Beschichtung in einem Bereich von 10 bis 100 nm, insbesondere 15 bis 75 nm. Dadurch kann sichergestellt werden, dass die ursprünglichen Eigenschaften (beispielsweise optische Eigenschaften) der unbeschichteten Partikel auch im beschichteten Zustand weitgehend erhalten bleiben, und trotzdem ausreichende Biokompatibilität und mechanische und chemische Stabilität erreicht werden kann.

Die beschichteten Partikel weisen vorzugsweise einen Durchmesser auf, der 0,1 bis 50 % größer als der Durchmesser der unbeschichteten Partikel ist.

Als Kernmaterial kommen dispergierbare Partikel geeigneter Größe in Betracht. Bevorzugte Varianten des Verfahrens werden aber ausgeführt mit metallverbindungsbasiertem Kernmaterial, das halbleitend ist. Das Kernmaterial selbst kann vorteilhafterweise zumindest ausgewählt sein aus Sulfiden, Nitriden, Carbiden, Fluoriden und/oder Oxiden beziehungsweise Mischoxiden der Schwermetalle insbesondere von Indium, Arsen, Antimon, Gallium und/oder Zinn. Erwähnt seien explizit auch für das Kernmaterial Cd, In, Sn, Ti, Zr, Si, Al und Verbindungen davon, beispielsweise C-, N- oder Phosphat-Verbindungen, insbesondere von Ti. Erwähnt seien explizit Titancarbide, Titannitride, Titancarbonitride und die entsprechenden Oxoverbindungen, insbesondere Titanoxonitride und Titanoxocarbonitride sowie die entsprechenden Verbindungen der anderen genannten Elemente sowie Telluride, intermetallische Verbindungen, Arsenide und Selenide und Oxide. Die Verwendung von Agglomeraten und Mischungen der genannten Verbindungen sei offenbart. Mit dem erfindungsgemäßen Verfahren sind auch pyrophore Substanzen handhabbar.

Das Kernmaterial kann besonders bevorzugt im Wesentlichen Indiumzinnoxid sein, ganz besonders bevorzugt mit einem Zinngehalt von 5 ± 3 mol%, und noch bevorzugter von 7 ± 0,5 mol%.

Die Konzentration der zu beschichtenden Partikel in der ursprünglichen Dispersion liegt vorzugsweise in einem Bereich von 5 bis 20 Gew.-%. Die Einhaltung dieser Konzentrationsgrenzen ist besonders wichtig, da die Aufbringung der Beschichtung auf die unbeschichteten Partikel nach statistischen Gesetzmäßigkeiten erfolgt. Grundsätzlich muss im Moment der Zudosierung des Beschichtungsmaterials in dem entsprechenden Volumenelement der Dispersion der zu beschichtenden Partikel genügend Partikelanteil vorliegen, um das "ausfallende Kieselsol aufzunehmen". Ist die Anfangskonzentration zu gering, besteht die Gefahr, dass sich Kristallkeime aus reinem Kieselgel bilden, die dann bevorzugt beschichtet werden. Dies würde dann in unvollständiger Beschichtung der zu beschichtenden Partikel resultieren. Ist die Anfangskonzentration der Dispersion der zu beschichtenden Partikel dagegen zu hoch, kann es während des erfindungsgemäßen Verfahrens zu deutlichen Viskositätserhöhungen kommen aufgrund der Bildung von "Netzstrukturen", da sich die beschichteten Partikel zunahe kommen.

Im erfindungsgemäßen Verfahren wird mit den unbeschichteten Partikeln zunächst eine wässrige Dispersion gebildet. Als Lösungsmittel können neben dem Hauptbestandteil Wasser auch andere Lösungsmittel wie Alkohole (beispielsweise Methanol, Ethanol oder Isopropanol), Ether, Alkane oder andere Lösungsmittel enthalten. Besonders bevorzugt wird als Lösungsmittel jedoch Wasser eingesetzt.

Zu der Dispersion der unbeschichteten Partikel wird erfindungsgemäß eine Lösung enthaltend Silikat gegeben. Vorteilhafterweise ist das Silikat ein Erdalkali- oder Alkalisilikat, ganz besonders bevorzugt Kalium- oder Natriumsilikat. Das im erfindungsgemäßen Verfahren eingesetzte Silikat kann auch eine Mischung dieser Silikate sein. Die Konzentration der im erfindungsgemäßen Verfahren eingesetzten Silikatlösung liegt in einem Bereich von 10 bis 50 Gew.-%. Als Lösungsmittel für die Kaliumsilikatlösung kommen vorteilhafterweise die gleichen Lösungsmittel wie für die unbeschichteten Partikel in Frage, jedoch unabhängig von dem Lösungsmittel ausgewählt für die unbeschichteten Partikel. Vorteilhafterweise liegt das Gewichtsverhältnis im Silikat von SiO₂ zum Alkali- oder Erdalkalioxid in einem Bereich von 1,2 bis 2,2. Wird als Silikat Kaliumsilikat eingesetzt, so liegt das Gewichtsverhältnis von SiO₂ zu H₂O vorzugsweise in einem Bereich von 1,8 bis 1,9.

Es ist bevorzugt, wenn die kationischen Bestandteile der Silikathülle zumindest im Wesentlichen eine Größe von über 0,095 nm aufweisen. Es hat sich gezeigt, dass in solchen Fällen die Silikathülle die gewünschten Zuschlagsmaterialeigenschaften nicht negativ beeinflusst und die Hülle dennoch stabil ist.

Es ist möglich, eine solgelbasierte Hülle vorzusehen, das heißt insbesondere, eine Sol-Gelhülle, die auf Erdalkali- oder Alkalisilikatbasis aufgebaut ist.

Das Verhältnis des Volumens der Dispersion der unbeschichteten Partikel zum Volumen der Silikat enthaltenden Lösung liegt vorteilhafterweise in einem Bereich von 1 bis 3.

Vorteilhafterweise stellt man den pH-Wert während der Zugabe der Silikat enthaltenden Lösung auf mindestens 2,5 und weniger als 8 ein, insbesondere höchstens 7, besonders bevorzugt höchstens auf einen Wert 10 % oberhalb des isoelektrischen Punktes des zu beschichtenden Materials ein. Ein pH-Wert von weniger als 8 ist deshalb vorteilhaft, da so ein 100 %iges Ausfallen des Silikats sichergestellt werden kann. Ein pH-Wert von höchstens 7 ist deshalb vorteilhaft, da der Beschichtungsprozess dann effektiver und schneller abläuft.

Wichtig bei der Zugabe der Silikat enthaltenden Lösung ist die akustische Erregung, insbesondere durch Ultraschall. Dies ist überraschend, da Ultraschall normalerweise eingesetzt wird, um Materialverbunde zu trennen. Im erfindungsgemäßen Verfahren soll ja jedoch das Beschichtungsmaterial mit dem Partikel verbunden werden. Der Einsatz von Ultraschall im erfindungsgemäßen Verfahren hat gegenüber den bekannten Verfahren zahlreiche Vorteile. So führt der Einsatz von akustischer Erregung wie beispielsweise Ultraschall dazu, dass die Beschichtung nicht mehr unkontrolliert auf die zu beschichtenden Partikel aufwächst und homogen wird. Bei den Beschichtungsverfahren des Standes der Technik kam es durch unkontrolliertes Wachstum zu blumenkohlartigen Strukturen auf der Oberfläche oder sogar zum Umwachsen verschiedener Primärpartikel mit dem Beschichtungsmaterial, so dass die entstehenden Partikel oder Partikelagglomerate bislang nach der Beschichtung aufgebrochen werden mussten (beispielsweise durch Mahlen oder Atomisieren). Dies ist jedoch mit dem erfindungsgemäßen Verfahren wie bereits oben dargelegt nicht mehr notwendig. Selbst beim Mahlen der erfindungsgemäß hergestellten beschichteten Partikel bleiben im Gegensatz zum Stand der Technik die Eigenschaften der beschichteten Partikel erhalten.

Da das erfindungsgemäße Beschichtungsverfahren bei wesentlich niedrigeren pH-Werten als im Stand der Technik durchgeführt wird, sind die Ausgangsdispersionen der unbeschichteten Partikel zumeist relativ instabil, insbesondere bei Partikeln mit Durchmessern von mehr als 0,5 µm. Durch den Eintrag von akustischer Erregung können diese nahezu unstabilen Dispersionen zumindest temporär vollständig dispergiert werden, womit eine Beschichtung der Agglomerate verhindert wird und so nur Primärpartikel beschichtet werden. Akustische Erregung insbesondere Ultraschall wird vorteilhafterweise in einer Intensität im Bereich von 0,02 bis 0,1 W/ml eingesetzt. Liegt die Intensität der akustischen Erregung unterhalb dieses Bereiches, so können die unter Umständen in der Dispersion vorhandenen Agglomerate nicht in Primärpartikel getrennt werden. Liegt die Intensität jedoch oberhalb dieses Bereiches, so kann die Beschichtung nicht hinreichend fest mit den Primärpartikeln verbunden werden.

Der pH-Wert wird während der Zugabe der Silikat enthaltenden Lösung vorteilhafterweise durch gleichzeitige Zugabe von Säure konstant gehalten. Konstant im Sinne der Erfindung heißt, dass der pH-Wert während der Zugabe der Silikat enthaltenden Lösung nicht mehr als 0,1 von dem anfänglich eingestellten pH-Wert abweicht. Dadurch kann eine im Vergleich zum Stand der Technik besonders gleichmäßige und glatte Beschichtung ohne übermäßige "Blumenkohl"-Strukturen erhalten werden.

Vorteilhafterweise können als Säuren Mineralsäuren oder organische Säuren oder Mischung derselben eingesetzt werden. Besonders bevorzugt werden Mineralsäuren, wie Salzsäure, Schwefelsäure, Salpetersäure oder auch organische Säuren wie konzentrierte Essigsäure eingesetzt. Die aliquote Konzentration der Säure liegt vorteilhafterweise in einem Bereich von 0,05 bis 2 Mol/l.

Die Zugabegeschwindigkeit der Silikat enthaltenden Lösung nimmt vorteilhafterweise vom Anfang der Zugabe bis zum Ende der Zugabe zu. So wird zu Beginn der Zugabe zunächst vorteilhaft Silikat enthaltende Lösung in einer Menge von 0,5 bis 1 Vol.-% der gesamten Silikat enthaltenden Lösung pro Minute zugegeben, während gegen Ende der Zugabe der Silikat enthaltende Lösung vorteilhafterweise zwischen 1 und 2 Vol.-% der gesamten Silikat enthaltende Lösung pro Minute zugegeben wird. Werden diese Bedingungen nicht beachtet, so kann es leicht zu Fehlstellen oder ungleichmäßiger Beschichtung kommen.

Vorteilhafterweise stellt man die Temperatur der. Dispersion während der Zugabe der Silikat enthaltenden Lösung in einem Bereich zwischen 50 und 95°C ein. Liegt die Temperatur unterhalb dieses Bereiches, kann leicht eine Viskositätserhöhung ("Vergelung") auftreten, die den Beschichtungsprozess erheblich behindern kann. Liegt die Temperatur jedoch oberhalb dieses Bereiches, so kann dies zu einer Viskositätserhöhung durch erhebliche Verdampfung von Lösungsmittel führen.

Vorteilhafterweise liegt die Ausgangskonzentration der Dispersion der zu beschichtenden Teilchen in einem Bereich von 7 bis 25 Gew.-%.

Nach Abschluss der Zugabe der Silikat enthaltende Lösung kann die resultierende Mischung vorteilhafterweise für einen Zeitraum von 0,5 bis 3 h bei den gleichen oder unterschiedlichen Bedingungen weiter gerührt werden.

Nach der Zugabe der Silikat enthaltende Lösung oder gegebenenfalls nach einem daran anschließenden Rührprozess wird das Lösungsmittel abgetrennt. Diese Trennung geschieht vorteilhafterweise durch Filtrieren, Zentrifugieren, Gefriertrocknen oder Sprühtrocknen. Gegebenenfalls werden bei dieser Trennung auch Kalium- und/oder Chloridionen abgetrennt. Zur besseren Abtrennung können die beschichteten Partikel auch agglomeriert werden, beispielsweise durch Zugabe von Flockungsmittel oder Veränderung des pH-Wertes in die Nähe des isoelektrischen Punktes.

Anschließend wird der abgetrennte Feststoff vorteilhafterweise getrocknet. Dies geschieht bei einer Temperatur im Bereich von 60 bis 300 °C, auf jeden Fall jedoch bei einer Temperatur unterhalb der Sintertemperatur des eingesetzten Silikats. Besonders bevorzugt findet die Trocknung bei einer Temperatur im Bereich zwischen 60 und 150 °C statt. Diese Trocknung geschieht vorteilhafterweise in einem Ofen oder einem Trockenschrank und erstreckt sich vorzugsweise über einen Zeitraum von 1 h bis 18 h.

Mit dem Zuschlag material können insbesondere faserige Materialien versehen werden. Bei den faserigen Materialien kann es sich um Kunstfasern oder faserige Materialien auf natürlicher, insbesondere pflanzlicher Basis handeln. Erwähnt seien insbesondere die Verwendung mit Baumwollstoffen, wo etwa durch die Aufbringung von Zuschlagstoffen Farbeffekte erzielt werden können und/oder eine gewünschte IR-Absorption, die im Markenkleidungsbereich auch zur Echtheitsprüfung herangezogen werden kann, ohne das sichtbare Design des Materials zu beeinträchtigen. Nichts anderes gilt bei der Verwendung der Zuschlagstoffe, die zusammen mit anderen faserigen Materialien, wie Cellulose und typisch cellulosebasierten Stoffen, wie zum Beispiel Papieren, insbesondere solchen, die biologisch unbedenklich sein müssen, etwa weil sie wie Kaugummipapiere lebensmittelecht zu sein haben, oder Geldscheine oder Hygienepapiere und -utensilien, die in Kontakt mit menschlicher Haut kommen können, insbesondere dann auch, wenn diese feucht ist. Die Verwendbarkeit insbesondere in saurem Milieu muss dann gegebenenfalls ebenfalls sichergestellt sein. Die Aufbringung des Zuschlagmaterials kann bei der Fasermaterialerzeugung oder später, etwa durch Aufdrucken und/oder Sprühen erfolgen.

Die Partikel werden vorteilhafterweise einem faserigen pflanzlichen Material vor dessen Verarbeitung zu einem großflächigen Fasergebilde beziehungsweise Faserstoff zugesetzt. Das so erhaltene Material nach Ausbildung des großflächigen Faserstoffes weist die durch die nanopartikulären Kernteilchen vorgesehenen optischen Eigenschaften auf, hat eine hohe Stabilität der optischen Eigenschaften auch unter aggressiven chemischen Bedingungen und es gehen keine biologisch erkennbaren Gefahren von dem Faserstoff aus. Nichts anderes gilt bei Verwendung des Zuschlagstoffes als Pigment in aufzusprühenden Flüssigkeiten.

In einer weiteren Ausführungsform wird die der Erfindung zugrundeliegende Aufgabe gelöst durch Partikel mit einer Silikatbeschichtung hergestellt nach dem oben beschriebenen Verfahren, die dadurch gekennzeichnet sind, dass die Silikatbeschichtung eine Dicke in einem Bereich von 5 bis 75 nm Dicke aufweist und der Durchmesser des beschichteten Partikels höchstens 50 % größer als der Durchmesser des unbeschichteten Partikels ist.

Vorteilhafterweise bestehen die Partikel aus Indiumzinnoxid, das einen Zinngehalt in einem Bereich von 7 ± 0,5 mol% aufweist. Die Indiumzinnoxidpartikel weisen dank der Silikatbeschichtung gute Biokompatibilität auf.

### Ausführungsbeispiele:

### Beispiel 1: Beschichtung von Nano-Indiumzinnoxid mit SiO₂

In einem 1000 ml-Becherglas wurden 400 g einer (sauer stabilisierten) 10 Gew.-%igen wässrigen handelsüblichen ITO-Dispersion einer Partikelgröße von weniger als 50 µm vorgelegt. Der pH-Wert betrug etwa 3.

Die Dispersion wurde auf 75 °C aufgeheizt und die Temperatur ± 2 °C konstant gehalten. Es erfolgte die kontinuierliche Zugabe von 240 g einer verdünnten Kaliumsilikatlösung mit einer Konzentration von 185 g/l im Verlauf von 95 min. Die eingesetzte Kaliumsilikatlösung wies ein Gewichtsverhältnis von SiO₂ : K₂O von 1,85 : 1 (± 0,05) auf.

Während der gesamten Zugabe und der pH-Wert auf ± 0,1 durch gleichzeitige Zugabe einer HCl-Lösung mit c = 0,5 mol/l (aliquote Konzentration) konstant gehalten und mittels einer Ultraschallsonotrode aus Titan unmittelbar an der Zugabestelle mit einer Leistung von 60 W beschallt.

Nach Beendigung der Zugabe wurde durch Zugabe einer 10 %igen KOH-Lösung der pH-Wert auf 5,5 verschoben, bis eine deutlich sichtbare Koagulation eintrat. Die Dispersion wurde druckfiltriert und gewaschen. Der Filterkuchen wurde über Nacht bei 60 °C getrocknet.

### Vergleichsbeispiel 1: Beschichtung ohne Ultraschallbeaufschlagung

Analog zu Beispiel 1 wurde dasselbe Verfahren ohne Ultraschallbeaufschlagung durchgeführt.

### Eigenschaften der Pulver:

### Beschichtetes Pulver aus Beispiel 1

Das beschichtete Nano-ITO wies während eines Zeitraumes von 30 min gegenüber einer 5 %igen HCl-Lösung eine Stabilität von >95 % auf. Im Vergleich dazu wies unbeschichtetes Ausgangsmaterial unter den gleichen Bedingungen eine Stabilität von <25 % auf.

Nach Anwendung geeigneter Dispersionstechniken konnten folgende Teilchengrößenverteilungen gemessen werden:

| Volumenverteilung | D50 | D90 | D99 |
|---|---|---|---|
| Ausgangsmaterial vor der Beschichtung | 45 nm | 66 nm | 86 nm |
| Beschichtet mit SiO₂ | 56 nm | 91 nm | 126 nm |

### Beschichtetes Pulver aus Vergleichsbeispiel 1:

Ohne Ultraschall-Eintrag: signifikante Erhöhung der Teilchengrößenverteilung durch Beschichten von Agglomeraten und damit einhergehend geringere mechanische und chemische Stabilität (größere "Aufflockungen" und Aggregatbildungen = Hebelwirkung gegenüber mechanischen Angriffen). Das beschichtete Nano-ITO wies während eines Zeitraumes von 30 min gegenüber einer 5 %igen HCl-Lösung eine Stabilität von 25 % auf.

| Volumenverteilung | D50 | D90 | D99 |
|---|---|---|---|
| Ausgangsmaterial vor der Beschichtung | 45 nm | 66 nm | 86 nm |
| Beschichtet mit SiO₂ | 195 nm | 485 nm | 1126 nm |

### Beispiel 2: Beschichtung von Nano-Zinkoxid mit SiO₂

In einem 1000 ml-Becherglas wurden 400 g einer neutral stabilisierten 10 %igen wässrigen ZnO-Dispersion mit einer Teilchengröße von weniger als 50 µm vorgelegt. Der pH-Wert betrug etwa 7.

Die Dispersion wurde auf 75 °C aufgeheizt und die Temperatur ± 2 °C konstant gehalten. Es erfolgte die kontinuierliche Zugabe von 240 g einer verdünnten Kaliumsilikatlösung mit einer Konzentration von 370 g/l im Verlauf von 95 min. Die eingesetzte Kaliumsilikatlösung wies ein Gewichtsverhältnis SiO₂ : K₂O von 1,85 : 1 (± 0,05)auf.

Während der gesamten Zugabe wurde der pH-Wert auf ± 0,1 durch gleichzeitige Zugabe einer HCL-Lösung mit c = 1 mol/l (aliquote Konzentration) konstant gehalten und mittels einer Ultraschallsonotrode aus Titan unmittelbar an der Zugabestelle mit einer Leistung von 60 W beschallt.

Nach Beendigung der Zugabe wurde zur Koagulation 100 g festes Kaliumchlorid zugegeben. Die Dispersion wurde druckfiltriert und gewaschen. Der Filterkuchen wurde für 2 h bei 300 °C getrocknet.

### Eigenschaften:

Das beschichtete Nano-ZnO wies während eines Zeitraums von 30 min gegenüber einer 5 %igen HCl-Lösung eine Stabilität von >90 % auf. Das entsprechende, nicht beschichtete ZnO Pulver zeigte eine Stabilität von <5 %.

Mit geeigneten Dispersionstechniken konnten folgende Teilchengrößenverteilungen gemessen werden.

| Volumenverteilung | D50 | D90 | D99 |
|---|---|---|---|
| Ausgangsmaterial vor der Beschichtung | 153 nm | 250 nm | 2300 nm |
| Beschichtet mit SiO₂ | 170 nm | 280 nm | 2450 nm |

### Vergleichsbeispiel 2: Beschichtung von Bornitrid mit SiO₂

In einem 1000 ml-Becherglas wurden 450 g einer 10 %igen wässrigen Dispersion von Bornitrid einer Partikelgröße von weniger al 50 µm vorgelegt. Der pH-Wert betrug etwa 8.

Die Dispersion wurde auf 75 °C aufgeheizt und die Temperatur ± 2 °C konstant gehalten. Es erfolgte die kontinuierliche Zugabe von 200 g einer verdünnten Kaliumsilikatlösung mit einer Konzentration von 370 g/l im Verlauf von 95 min. Die eingesetzte Kaliumsilikatlösung wies ein Gewichtsverhältnis SiO₂ : K₂O von 1,85 : 1 (± 0,05) auf.

Während der gesamten Zugabe wurde der pH-Wert auf ± 0,1 durch gleichzeitige Zugabe einer HCl-Lösung mit c = 1 mol/l (aliquote Konzentration) konstant gehalten und mittels einer Ultraschallsonotrode aus Titan unmittelbar an der Zugabestelle mit einer Leistung von 60 W beschallt.

Nach Beendigung der Zugabe wurde die Dispersion druckfiltriert und gewaschen. Der Filterkuchen wurde 2 h bei 300 °c getrocknet.

### Eigenschaften:

Mit geeigneten Dispersionstechniken konnten folgende Teilchengrößenverteilungen gemessen werden:

| Volumenverteilung | D50 | D90 | D99 |
|---|---|---|---|
| Ausgangsmaterial vor der Beschichtung | 2,89 µm | 6,10 µm | 9,17 µm |
| Beschichtet mit SiO₂ | 2,78 µm | 5,97 µm | 9,20 µm |

Eine Verringerung der eingebrachten Ultraschall-Leistung führte zu einer signifikanten Erhöhung der Teilchengrößenverteilung und damit einhergehend zu geringeren mechanischen und chemischen Stabilitäten (größere "Aufflockungen" und Aggregatbildungen = Hebelwirkung gegenüber mechanischen Angriffen).

## Patentansprüche

1. Verfahren zur Herstellung einer Silikatbeschichtung auf Partikeln, **dadurch gekennzeichnet, dass** man zu einer Dispersion der unbeschichtenden Partikel mit einen Durchmesser von kleiner 50 µm unter akustischer Erregung eine Silikat enthaltende Lösung gibt, wobei man den pH-Wert während der Zugabe der Silikat enthaltenden Lösung auf höchstens 7 einstellt.

2. Verfahren gemäß Anspruch 1, **dadurch gekennzeichnet, dass** man unbeschichtete Partikel mit einem durchschnittlichen Durchmesser in einem Bereich von 15 nm bis 35 µm beschichtet.

3. Verfahren gemäß Anspruch 1, **dadurch gekennzeichnet, dass** man den pH-Wert während der Zugabe der Silikat enthaltenden Lösung auf mindestens 2,5, jedoch höchstens 10 % oberhalb des isoelektrischen Punktes des zu beschichtenden Materials einstellt.

4. Verfahren gemäß Anspruch 1, **dadurch gekennzeichnet, dass** man den pH-Wert während der Zugabe der Silikat enthaltenden Lösung durch gleichzeitige Zugabe von Säure konstant hält.

5. Verfahren gemäß Anspruch 1, **dadurch gekennzeichnet, dass** man die Temperatur der Dispersion während der Zugabe der Silikat enthaltenden Lösung in einem Bereich zwischen 50 und 95 °C einstellt.

6. Verfahren gemäß Anspruch 1, **dadurch gekennzeichnet, dass** man die Ausgangskonzentration der Dispersion der zu beschichtenden Partikel in einem Bereich von 7 bis 25 Gew.-% einstellt.

7. Partikel, **hergestellt nach dem Verfahren gemäß Anspruch 1,** mit einem Durchmesser von kleiner 50 µm mit einer Silikatbeschichtung einer Dicke von 5 bis 75 nm wobei der Durchmesser des beschichteten Partikels höchstens 50 % größer als der Durchmesser des unbeschichteten Partikels ist.

8. Partikel gemäß Anspruch 7, **dadurch gekennzeichnet, dass** die Partikel aus Indiumzinnoxid bestehen, das einen Zinngehalt in einem Bereich von 7 ± 0,5 mol% aufweist.

## Claims

1. A process for preparing a silicate coating on particles, **characterized in that** a silicate-containing solution is added with acoustic excitation to a dispersion of the uncoated particles having a diameter of smaller than 50 µm, wherein during the addition of the silicate-containing solution, the pH value is adjusted to at most 7.

2. The process according to claim 1, **characterized in that** uncoated particles having an average diameter within a range of from 15 nm to 35 µm are coated.

3. The process according to claim 1, **characterized in that** during the addition of the silicate-containing solution, the pH value is adjusted to at least 2.5, and to at most 10% above the isoelectric point of the material to be coated.

4. The process according to claim 1, **characterized in that** the pH value is kept constant during the addition of the silicate-containing solution by simultaneously adding acid.

5. The process according to claim 1, **characterized in that** the temperature of the dispersion during the addition of the silicate-containing solution is adjusted within a range of from 50 to 95°C.

6. The process according to claim 1, **characterized in that** the starting concentration of the dispersion of the particles to be coated is adjusted within a range of from 7 to 25% by weight.

7. Particles prepared by the process according to claim 1, having a diameter of smaller than 50 µm and comprising a silicate coating with a thickness of from 5 to 75 nm, wherein the diameter of the coated particle is larger than the diameter of the uncoated particle by at most 50%.

8. The particles according to claim 7, **characterized in that** said particles consist of indium tin oxide with a tin content of 7 ± 0.5 mole percent.

## Revendications

1. Procédé pour la préparation d'un revêtement de silicate sur des particules, **caractérisé en ce que** l'on ajoute une solution contenant du silicate à une dispersion des particules non revêtues ayant un diamètre de moins de 50 µm tout en appliquant une excitation acoustique, le pH étant ajusté à 7 au plus pendant l'addition de la solution contenant le silicate.

2. Procédé selon la revendication 1, **caractérisé en ce que** l'on revêtit des particules non revêtues ayant un diamètre moyen compris dans la gamme allant de 15 nm à 35 µm.

3. Procédé selon la revendication 1, **caractérisé en ce que** l'on ajuste le pH à 2,5 au moins, mais au plus 10% au-dessus du point isoélectrique du matériau à revêtir pendant l'addition de la solution contenant le silicate.

4. Procédé selon la revendication 1, **caractérisé en ce que** l'on maintien le pH constant par addition simultanée d'acide pendant l'addition de la solution contenant le silicate.

5. Procédé selon la revendication 1, **caractérisé en ce que** l'on ajuste la température de la dispersion dans la gamme allant de 50 à 95°C pendant l'addition de la solution contenant le silicate.

6. Procédé selon la revendication 1, **caractérisé en ce que** l'on ajuste la concentration initiale de la dispersion des particules à revêtir dans la gamme allant de 7 à 25 pour cent en poids.

7. Particule préparée par le procédé selon la revendication 1, ayant un diamètre de moins de 50 µm et un revêtement de silicate avec une épaisseur de 5 à 75 mm, le diamètre de la particule revêtue étant supérieur d'au plus 50% au diamètre de la particule non revêtue.

8. Particule selon la revendication 7, **caractérisé en ce que** les particules consistent en oxyde d'indium dopé à l'étain ayant une teneur en étain comprise dans la gamme de 7 ± 0,5 pour cent molaire.
